# EUROPEAN PATENT APPLICATION

(11) **EP 3 106 945 A1**
(43) Date of publication of application: **21.12.2016**
(21) Application number: 15172123.0
(22) Date of filing: 15.06.2015
(51) Int. Cl.: G05B 19/4097, B23K 26/38

(54) **METHOD AND SYSTEM FOR MACHINE CUTTING IN SHEET MATERIAL**

(71) Applicant: Tomologic AB, 112 33 Stockholm (SE)
(72) Inventor: Norberg Ohlsson, Magnus, 112 33 Stockholm (SE)
(74) Representative: Ehrner & Delmar Patentbyrå AB

(57) **Abstract**

The invention relates to a method (100) for preparing machine cutting in sheet material, comprising the steps of obtaining (101) a set of geometries to be cut, positioning (102) the set of geometries for cutting, and thereafter deciding (104) on a format of sheet material based on the positioned geometries. The invention further relates to a corresponding system for machine cutting in sheet material, and a corresponding computer program product.

## Description

### TECHNICAL FIELD

The invention relates to a method for machine cutting in sheet material, to a corresponding system, computer program product and non-transient computer-readable medium.

### BACKGROUND

There are various cutting technologies available to cut parts out of sheet material. The parts may be cut out by e.g. punch pressing or beam cutting. Beam cutting is defined as having some kind of beam as the cutting means, such as laser cutting, plasma cutting, ion beam cutting, flame or torch cutting, water cutting, pellet cutting or air cutting. In punch pressing a punch and a die is used to cut material from a sheet material.

With conventional cutting technology there is a huge problem with waste, and a normal production reliable cutting plan has 20-50 percent waste. It is thus general desirable to minimize the waste material. Conventionally, each single part to be cut is defined with a cutting path which encloses that single part, and the parts are positioned with a safety distance to any adjacent part. One major source of waste is scrap material formed by the safety distances provided between parts being cut out from a sheet material.

In WO 2011/042058 A1 a method is disclosed for machine cutting of several parts out of a piece of material using a beam cutting technology. The invention disclosed therein provides a set of controlling rules and variables for forming of a cluster of parts with free form shapes, the parts being positioned so close to each other so that only one cut from the cutting beam is found between adjacent parts whenever the shape of said parts allows it. This method reduces the need of safety distances between individual parts and thus reduces the waste material between the parts substantially.

However, another source of waste is due to the conventional process of cutting from sheet material. Conventionally, the operator first selects a sheet format to form the basis for the cutting operation. The geometries to be cut are approximated by regular polygons and placed and positioned in the format with safety distances provided between the parts. The safety distances are provided by expanding the approximated polygon for each part to provide a corresponding safety distance. The polygons are positioned on the sheet format (also a polygon) by a no-fit polygon (NFP) algorithm, to ensure that the polygons do not overlap with each other or the edge of the sheet format. Any leftover material when finished positioning and cutting of the geometries is either considered scrap, or residual sheet material. Residual material is cut to a new sheet format and scrap material goes to waste.

### SUMMARY OF THE INVENTION

It is an object of the present invention to reduce the shortcomings of conventional technology, and in particular to reduce the amount of scrap produced when cutting a set of geometries from sheet material.

Thus the invention relates to a method for machine cutting in sheet material, comprising the steps of,
- obtaining a set of geometries to be cut,
- positioning the set of geometries for cutting, thereafter
- deciding on a format of sheet material based on the positioned geometries, and
- cutting the positioned geometries from the decided format of sheet material.

Thus an important aspect of the present invention is that the format of sheet material is decided after the set of geometries is positioned in a two dimensional space. The invention has the advantage that the format of the sheet material used in subsequent cutting operation may be optimized to the actual decided distribution of the set of geometries. Thus the amount of scrap produced may be significantly reduced with respect to conventional technology. This has the benefit of reducing manufacturing costs and reducing environmental impact. Optimized positioning of geometries (e.g. by conventional NFP) is a computational intensive process, and the present invention has the further benefit of reducing the amount of computing tasks needed to optimize the sheet format to any set of geometries while reducing scrap material

The format of the sheet material is defined as the two-dimensional extension of the material in the plane of the sheet material. The format may be a quadratic format, a rectangular format or an irregular format. The format includes shape and dimensions of the sheet material in the plane of the sheet material.

Deciding on a format of sheet material may comprise selecting a best fit of format from a candidate set of formats.

Thus, an available set of formats, such as standard formats, formats in store etc. may form basis for a decision on the selection of format of the sheet material.

The method may comprise repeatedly altering the positioning of the set of geometries, and deciding on the best fit of format to the altered positioning of the set of geometries, to obtain a candidate set of positioning and format of sheet material combinations.

Thereby a number of different positioning and sheet material format combinations may be obtained as candidates for deciding on the format of the sheet material for cutting.

Deciding on a format of sheet material may be based on;
- the extension of the positioned geometries in relation to the size of the format of sheet material;
- the amount of scrap material not belonging to the set of geometries to be cut obtained by the format of sheet material; and/or
- cost of different formats of sheet material.

Thus the extension of the positioned geometries and/or the amount of scrap, possibly in combination with the cost of different formats may be used as a basis for the decision on a format of sheet material. Thereby the cost and/or scrap minimization may be used to decide on the best fit of sheet format. The extension of the positioned geometries may be an approximation of the outer contour of the positioned geometries, e.g. by a polygon. The approximation of the outer contour may be a regular polygon, such as a rectangle, or an irregular polygon, having non-equal lengths of sides and/or angles.

The decided format of sheet material may be based on the extension of the positioned geometries with an additional safety region, forming a frame when the geometries are cut from the sheet material. The frame may have a width in the range of 0.01-250 mm, preferably in the range of 5-50 mm.

The method may further comprise creating a machining plan for the cutting of the positioned geometries.

The machining plan may be created before or after deciding on the format of sheet material.

The method may comprise machine cutting of geometries in sheet material with a beam cutting technology. The beam cutting technology may be laser cutting, plasma cutting, ion beam cutting, flame or torch cutting, water cutting, pellet cutting or air cutting, etc. Alternatively the method may comprise machine cutting by punch pressing, knife cutting etc. The sheet material may be e.g. metal sheet material, plastic sheet material, textile sheet material, fabric sheet material, paper or cardboard sheet material, wood sheet material, composite sheet material etc.

The set of geometries may comprise at least one cluster of parts comprising at least one part of free form shape, the parts of the cluster being positioned so close to one another so that only the thickness of one cut of the cutting device is found between adjacent parts where the shape of the parts allows it.

Thereby the amount of scrap in the cluster of parts may be reduced, and the cluster of parts may be positioned with other geometries in the set of geometries. The set of geometries may alternatively be a plurality of clusters of parts comprising at least one part of free form shape. The cluster(s) may consist of a plurality of parts of free form shape.

A shape may be defined as a closed contour comprising at least one curve or line. A free form shape may be defined as an irregular shape, such as having irregular lengths of sides and/or angles and/or comprising at least one curve. Regular shapes are e.g. squares, rectangles, triangles etc. A free form shape may be defined as a closed contour comprising at least one curve or line, wherein the contour defines at least one concave portion. The concave portion may be a concave curve portion or may be formed by one or more lines and/or curves. The free form shape is represented by its actual shape during positioning, and is not represented by an approximated regular polygon such as a rectangle. Thus free form shapes may be positioned closer to one another.

The method may be implemented as a tool for computer aided design (CAD) or computer aided manufacturing (CAM).

Thus the method may be an integral part in a computer based system for designing or manufacturing.

The invention further relates to a system for machine cutting several parts out of a piece of material, comprising
a processing unit configured to obtaining a set of geometries to be cut, positioning the set of geometries for cutting, and thereafter deciding on a format of sheet material based on the positioned geometries,
a cutting device, and
a control unit, wherein the control unit is configured to controlling the cutting device to cut the positioned geometries from the decided format of sheet material.

The cutting device may be a beam cutting device. The processing unit may further be configured to create a machining plan for the cutting of the positioned geometries, and wherein the control unit is configured to controlling the cutting device to cut the positioned geometries according to the machining plan.

The invention further relates to a computer program product comprising computer program code, which when executed enables a processor in a computer to perform the method disclosed herein.

The invention further relates to a non-transient computer-readable medium or media comprising data representing coded instruction sets configured for execution by a processor in a computer, the instructions comprising the method as disclosed herein.

The system, computer program product and non-transient computer-readable medium provide similar advantages as noted in relation to the corresponding features of the metod disclosed herein.

### BRIEF DESCRIPTION OF DRAWINGS

Various embodiments and examples related to the invention will now be described with reference to the appended drawing, where;
- Fig. 1: shows a method of preparing machine cutting in sheet material.
- Fig. 2: shows steps of a method of preparing machine cutting in sheet material.
- Fig. 3: shows a system for machine cutting in sheet material.

### DETAILED DESCRIPTION OF EMBODIMENTS

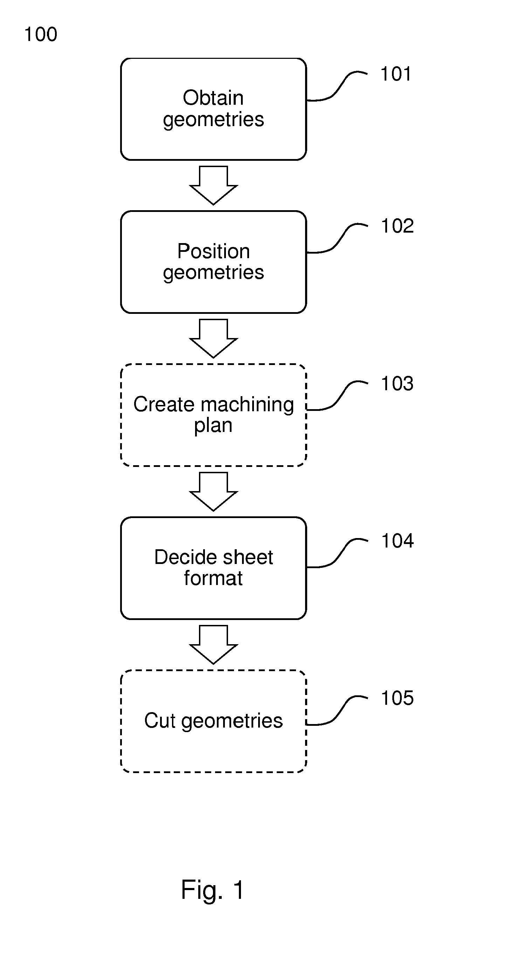

In Fig. 1 a method 100 of preparing machine cutting in sheet material is disclosed. The method first comprises obtaining 101 a set of geometries to be cut. The geometries may be any kind of shape or cluster of parts. The set of geometries are positioned 102 for cutting, preferably to minimize scrap between adjacent parts. Based on the positioned set of geometries a format of sheet material is thereafter decided 104.

A machining plan, e.g. a cutting plan, is created 103 for the cutting of the positioned geometries. The machining plan may be created prior to deciding on the format of sheet material, as illustrated in the figure, but it may alternatively be created after deciding on the format of sheet material. The machining plan defines how and in what order the cutting process will be conducted. The geometries are thereafter cut 105 according to the cutting plan, from the decided sheet format.

The step of deciding 104 on a format of sheet material is based on one or more of the extension of the positioned geometries in relation to the size of the format of sheet material, the amount of scrap material not belonging to the set of geometries to be cut obtained by the format of sheet material; and the cost of different formats of sheet material. The extension of the positioned geometries may be an approximation of the outer contour of the positioned geometries, e.g. by a polygon. The approximation of the outer contour may be a regular polygon, such as a rectangle, or an irregular polygon, having non-equal lengths of sides and/or angles. The amount of scrap obtained from the format of sheet material may be balanced to the cost of providing a particular format of sheet material, and/or cost per weight of the sheet material. The decided format of sheet material may have a regular or an irregular shape.

As one alternative the deciding on a format of sheet material comprises selecting a best fit of format for the geometries from a candidate set of formats. This may be provided by repeatedly altering the positioning of the set of geometries, and deciding on the best fit of format to the altered positioning of the set of geometries, to obtain a candidate set of positioning and format of sheet material combinations. From this candidate set of positioning and format of sheet material combinations the sheet format may be decided based on the criteria discussed above. Thus the best positioning and format of sheet material combination may be selected, which reduces the amount of scrap material and materials cost.

The set of geometries may comprises at least one cluster of parts of free form shape, the parts being positioned so close to one another so that only the thickness of only one cut of the cutting beam is found between adjacent parts whenever the shape of the parts allows it. Thus the amount of scrap between adjacent parts may be significantly reduced. As one alternative the set of geometries includes only a plurality of such clusters of parts of free form shape. Thus the sheet format may be utilized most efficiently.

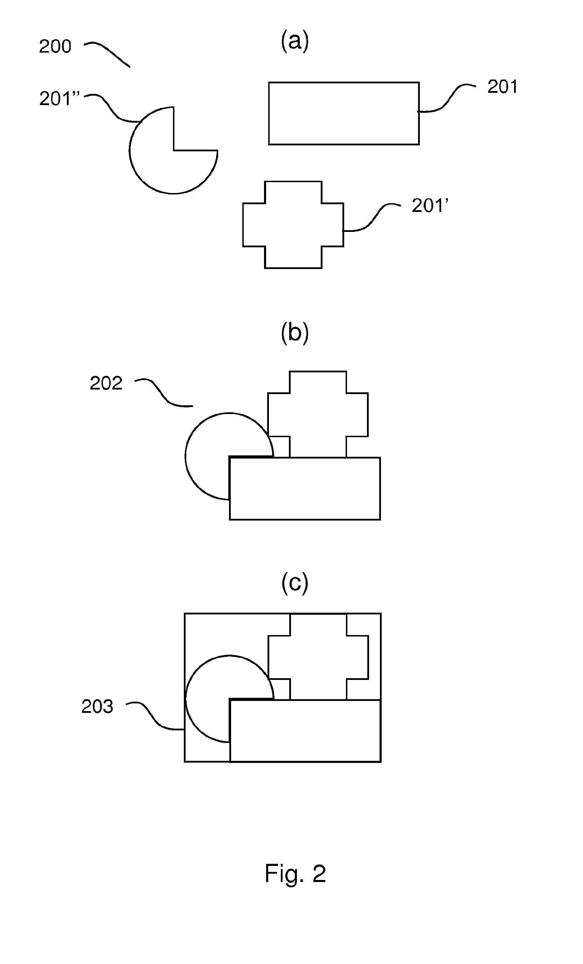

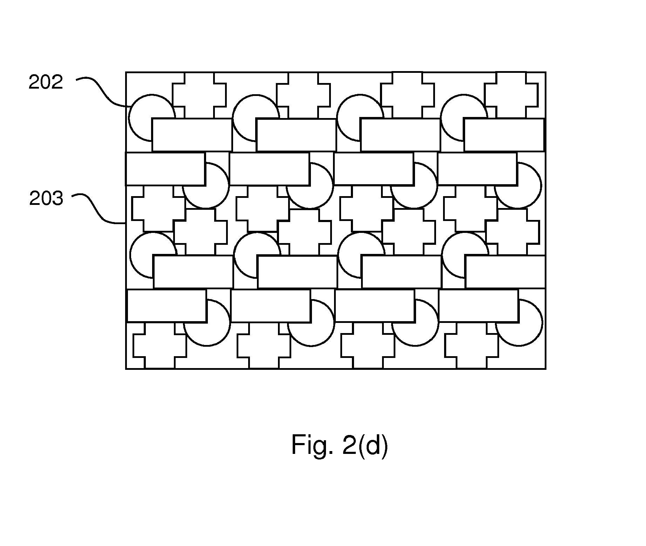

In Fig. 2 some steps of the method is shown graphically. In Fig. 2(a), a set 200 of geometries 201, 201' and 201" is provided. The set of geometries illustrated shows a regular geometry in the form of a rectangle 201, and two free form, irregularly shaped, geometries 201' and 201". Both free form shaped geometries comprise concave portions along the circumference. The geometries 201, 201', 201" are represented by their respective actual shape during positioning, i.e. not represented by an approximated regular polygon such as a rectangle.

The set of geometries are positioned with respect to each other, in the example shown in Fig. 2(b) forming a cluster 202 of parts, including both free form shaped parts and a regular shaped part. Since the geometries are represented by their respective actual shape during positioning they may be positioned close to each other, as shown in Fig. 2(b). The forming and cutting of clusters of parts of free form shapes is further disclosed in WO 2011/042058 A1.

Thereafter, in Fig. 2(c), a format 203 of sheet material is decided based on the positioned geometries. The format of the sheet is defined as the extension of the positioned geometries in the plane of the sheet material, and in this case the format has a common rectangular shape. However, also irregularly shaped sheet formats may be decided based on the present invention. It should be noted that the illustration shown in Fig. 2 is simplified, and that in regular production scale processing, the number of geometries may very well exceed 10, 100 or 1000 parts.

Further, in Fig. 2d an example where a plurality of clusters 202 as shown in Fig. 2(b) are obtained as a set of geometries which are positioned, whereafter a format 203 of sheet material is decided based on the positioned geometries.

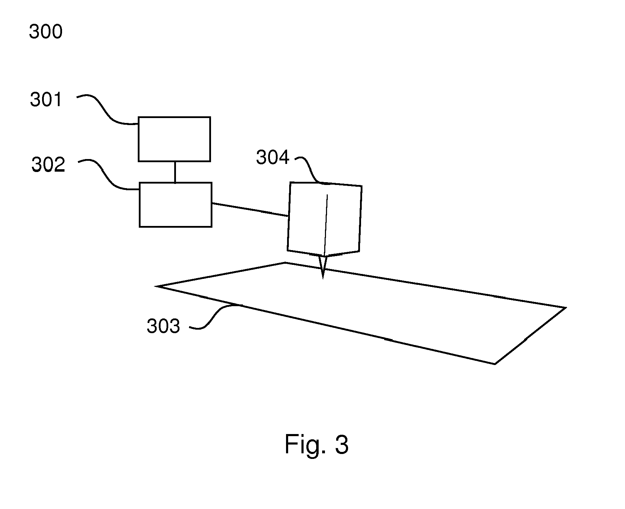

In Fig. 3 a system 300 for machine cutting several parts out of a piece of sheet material 303 is shown. The system comprises a processing unit 301 configured to obtaining a set of geometries to be cut, positioning the set of geometries for cutting, and thereafter deciding on a format of sheet material based on the positioned geometries. The processing unit is further configured to create a machining plan for the cutting of the positioned geometries.

The system further comprises a cutting device 304, and a control unit 302, wherein the control unit is configured to controlling the cutting device to cut the positioned geometries from the decided format of sheet material, according to the machining plan. In the example shown in Fig. 3 the cutting device is a beam cutting device. As furtheralternatives, a system with a punch press as cutting device and a system utilizing knife cutting is also proposed.

## Claims

1. A method for preparing machine cutting in sheet material, comprising the steps of;
- obtaining a set of geometries to be cut,
- positioning the set of geometries for cutting, thereafter
- deciding on a format of sheet material based on the positioned geometries.

2. The method according to claim 1 wherein deciding on a format of sheet material is based on;
- the extension of the positioned geometries in relation to the size of the format of sheet material;
- the amount of scrap material not belonging to the set of geometries to be cut obtained by the format of sheet material; and/or
- cost of different formats of sheet material.

3. The method according to claim 1 or 2 wherein deciding on a format of sheet material comprises selecting a best fit of format from a candidate set of formats.

4. The method according to any one of the preceding claims comprising repeatedly altering the positioning of the set of geometries, and deciding on the best fit of format to the altered positioning of the set of geometries, to obtain a candidate set of positioning and format of sheet material combinations.

5. The method according to any one of the preceding claims further comprising creating a machining plan for cutting of the positioned geometries, prior to or after deciding on the format of sheet material.

6. The method according to any one of the preceding claims wherein the set of geometries comprises at least one a cluster of parts of free form shape, the parts being positioned so close to one another so that only the thickness of one cut of the cutting device is found between adjacent parts whenever the shape of the parts allows it.

7. The method according to claim 6 wherein the set of geometries are a plurality of clusters of parts of free form shape.

8. The method according to any one of the preceding claims comprising machine cutting of geometries in sheet material with a beam cutting technology.

9. The method according to any one of the preceding claims implemented as a tool for computer aided design (CAD) or computer aided manufacturing (CAM).

10. A method for machine cutting several parts out of a piece of material according to any one of the preceding claims, further comprising cutting the positioned geometries from the decided format of sheet material.

11. A system for machine cutting several parts out of a piece of material, comprising a processing unit configured to obtaining a set of geometries to be cut, positioning the set of geometries for cutting, and thereafter deciding on a format of sheet material based on the positioned geometries,
a cutting device, and
a control unit, wherein the control unit is configured to controlling the cutting device to cut the positioned geometries from the decided format of sheet material.

12. The system according to claim 11 wherein the cutting device is a beam cutting device.

13. The system according to claim 11 or 12 wherein the processing unit is further configured to create a machining plan for the cutting of the positioned geometries, and wherein the control unit is configured to controlling the cutting device to cut the positioned geometries according to the machining plan.

14. Computer program product comprising computer program code, which when executed enables a processor in a computer to perform the method according to any one of claims 1 to 10.

15. A non-transient computer-readable medium or media comprising data representing coded instruction sets configured for execution by a processor in a computer, the instructions comprising the method according to any one of claims 1 to 10.
